# EUROPÄISCHE PATENTSCHRIFT

(11) **EP 3 298 201 B1**
(45) Veröffentlichungstag und Bekanntmachung des Hinweises auf die Patenterteilung: **27.01.2021**
(21) Anmeldenummer: 17704222.3
(22) Anmeldetag: 08.02.2017
(51) Int. Cl.: E02D 17/04, F16L 1/028, E02D 17/08, F16L 1/10

(54) **VERBAUSYSTEM**
SYSTEM FOR SUPPORTING A DITCH
SYSTÈME DE PROTECTION D'UNE TRANCHÉE

(30) Priorität: 29.02.2016 DE 102016103534
(43) Veröffentlichungstag der Anmeldung: 28.03.2018
(73) Patentinhaber: Naturspeicher GmbH, 89081 Ulm (DE)
(72) Erfinder: SCHECHNER, Alexander, 89075 Ulm (DE); LOPEZ, Mario, 89561 Dischingen (DE)
(74) Vertreter: Bergmeier, Werner
(86) Internationale Anmeldenummer: PCT/EP2017/052671
(87) Internationale Veröffentlichungsnummer: WO 2017/148662

(56) Entgegenhaltungen:
- DE-A1- 2 364 502
- DE-A1-102006 013 410
- GB-A- 2 272 921
- JP-A- S6 078 016

## Beschreibung

Die vorliegende Erfindung betrifft eine Trageinheit für ein freitragendes Verbausystem mit einem zumindest teilweise außerhalb eines Grabens anordenbaren Stützbügel, der sich in der vorgesehenen Verbaulage brückenartig über ein außerhalb und/oder oberhalb des Grabens anordenbares und in den Graben absenkbares Rohr erstreckt. Des Weiteren betrifft die Erfindung ein Verbausystem zum Grabenverbau für ein absenkbares Rohr mit zumindest zwei in Längsrichtung des Verbausystems voneinander beabstandeten Trageinheiten zur Aufnahme von Querkräften und zumindest einer zwischen diesen beiden angeordneten Verbaueinheit zum Abstützen des Grabens. Des Weiteren betrifft die vorliegende Erfindung ein Verfahren zum Verlegen eines Rohres, insbesondere eines biegsamen Kunststoffrohres, mit einem derartigen Verbausystem.

Aus der DE 236 45 02 A1 ist eine Einrichtung zum Verlegen von schweren Pipeline-Rohren mit großem Durchmesser in einen vorbereiteten langen Graben bekannt. Die Einrichtung umfasst einen in Grabenlängsrichtung verlegbaren Schienenstrang mit darauf zwangsgeführten, Hubaggregate aufweisenden Rohrtragegestell. Die Einrichtung umfasst ein brückenartig über den Graben aufgestelltes Gerüst mit klappbaren und umsetzbaren Bockgestellen und hängenden Rohrtragegestellen. Das Gerüst umfasst ferner einen von einem Rohrspeicher aus verlegten Schienenstrang mit integrierter, in Grabenlängsrichtung verlegbarer Rohrschweißstation. Das Ende des Rohrstrangs wird zum Verschweißen mit einem anderen Rohrstrangende in der Arbeitshöhe der Schweißkabine gehalten. Anschließend wird der gesamte Rohrstrang in der Länge fortschreitend oder aber auch in ganzer Länge gleichzeitig bis auf die Grabensohle abgesenkt. Nachteilig hierbei ist, dass der Graben keinen Verbau aufweist, der diesen vor nachrutschendem Erdreich schützt. Aufgrund von Arbeitsschutzverordnungen ist demnach ein Arbeiten im Inneren des Grabens nicht möglich.

Des Weiteren ist beispielsweise aus der DE 10 2006 019 236 B4 oder der JP 60 78 016 A eine Vorrichtung für den Grabenverbau bekannt, die ein Paar einander gegenüber angeordneter Verbauplatten umfasst, die in den Graben eingesetzt werden. Mittels mehrerer Spreizrohre sind diese gegenüberliegenden Verbauplatten gegeneinander gesichert. Nachteilig hierbei ist, dass aufgrund der notwendigen Spreizrohre bzw. Querstreben kein sich über mehrere derartiger Verbaueinheiten erstreckendes Rohr bis zur Grabensohle abgelassen werden kann.

Aus der GB 2 272 921 A ist ein gattungsfremder Grubenverbau mit vier im Erdreich verankerten Spundwänden bekannt, die die Grubenwände abstützen. Die Spundwände sind zusätzlich über ein Gerüst gestützt. Das Gerüst weist in der Mitte einen Stützbügel auf, unter den mittels eines Krans ein Tank durchgeführt und in die Grube hinabgelassen werden kann. Die beiden Enden des Stützbügels liegen am Grubengrund auf. Der Stützbügel greift seitlich an zwei Spundwänden an und presst diese seitlich nach außen.

Aufgabe der vorliegenden Erfindung ist es somit, eine Trageinheit, ein Verbausystem sowie ein Verfahren zum Verlegen eines Rohres bereitzustellen, das die vorstehend erwähnten Probleme beseitigt.

Vorgeschlagen wird eine Trageinheit für ein freitragendes Verbausystem mit einem zumindest teilweise außerhalb eines Grabens anordenbaren Stützbügel. In der vorgesehenen Verbaulage erstreckt sich dieser Stützbügel brückenartig über ein außerhalb und/oder oberhalb des Grabens anordenbares und in den Graben absenkbares Rohr. Das dafür vorgesehene Rohr ist somit vor dem Absenken im Inneren des Stützbügels aufnehmbar. Die Trageinheit umfasst zwei zumindest teilweise im Inneren des Grabens anordenbare und in Querrichtung der Trageinheit voneinander beabstandete Stützwände. Die Stützwände sind derart ausgebildet, dass diese ein seitliches Nachrutschen des Erdreiches verhindern, indem sie dieses nach außen hin abstützen. Die beiden Stützwände schließen sich jeweils an eines der beiden Enden des Stützbügels an. Der Stützbügel und die beiden Stützwände bilden zusammen einen barrierefreien Absenkraum aus. Innerhalb dieses Absenkraums erstrecken sich demnach keine Querstreben, die ein Absenken des Rohres behindern würden. Aufgrund des barrierefreien Absenkraums kann demnach innerhalb von diesem das dafür vorgesehene Rohr vom Bereich des Stützbügels in den Bereich der Stützwände abgesenkt werden. Des Weiteren stellt die Trageinheit vorteilhafterweise somit ein freitragendes System dar, das die durch das Erdreich auf die Stützwände wirkenden Querkräfte in sich aufnehmen kann. Hierfür weist der Stützbügel eine ausreichend hohe Steifigkeit auf, so dass die Stützwände trotz der durch das Erdreich auf diese wirkenden Querkräfte in Position gehalten werden.

Vorteilhaft ist es, wenn der Stützbügel zusammen mit den in Verlängerung zu seinen Schenkeln angeordneten Stützwänden eine ausschließlich sohlenseitig offene Tragstruktur bildet. Diese Tragstruktur weist somit ausschließlich sohlenseitig eine Öffnung auf, die sich insbesondere im Wesentlichen über die Grabenbreite hinweg erstreckt.

Bei sehr tiefen Gräben ist es für eine noch höhere Steifigkeit vorteilhaft, wenn die Trageinheit eine Stützstrebe, insbesondere eine Holzsteife, umfasst. Diese ist vorzugsweise im Bereich der Öffnung der Tragstruktur bzw. grabensolenseitig im Bereich der dem Stützbügel abgewandten Enden der beiden Stützwände angeordnet. Sie erstreckt sich in Querrichtung der Trageinheit zwischen diesen beiden Stützwänden. Die Stützstrebe ist vorzugsweise zwischen den beiden Stützwänden kraftschlüssig verspannt. Demnach verleiht der Stützbügel der Trageinheit außerhalb des Grabens und die Stützstrebe im Inneren des Grabens die nötige Steifigkeit, um sehr hohe Querkräfte aufnehmen zu können.

Vorteilhaft ist es, wenn der Stützbügel und die Stützwände versetzbar sind. Hierdurch können diese in einem vorgelagerten Bereich des Grabens erneut verwendet werden.

Um das Versetzen der Trageinheit zu erleichtern, ist es vorteilhaft, wenn die Stützstrebe als verlorene Strebe ausgebildet ist. In diesem Fall verbleibt die Stützstrebe im bestimmungsgemäßen Gebrauch im Graben und wird zusammen mit dem verlegten Rohr verschüttet.

In einer vorteilhaften Weiterbildung der Erfindung weisen die Stützwände jeweils eine erste Auflagefläche auf. Diese erste Auflagefläche dient dazu, die jeweilige Stützwand am Grabenrand aufzusetzen, so dass diese nur bis zu einer definierten Tiefe in den Graben eindringen kann. Mittels der ersten Auflagefläche ist ferner sichergestellt, dass die jeweilige Stützwand stets etwas über die Grabenöffnung übersteht, so dass diese ohne Gefahr außerhalb des Grabens mit dem korrespondierenden Stützbügel lösbar befestigbar ist. Vorzugsweise ist diese erste Auflagefläche auf der dem Absenkraum abgewandten Seite der Stützwand angeordnet. Zusätzlich oder alternativ ist diese erste Auflagefläche im Bereich des dem Stützbügel zugewandten Endes der jeweiligen Stützwand angeordnet. Vorzugsweise weisen die Stützwände demnach einen im Wesentlichen L-förmigen Grundkörper bzw. Querschnitt auf.

Vorteilhaft ist es, wenn die Stützwände jeweils zweiteilig ausgebildet sind und/oder die beiden Teile, insbesondere schienengeführt, in Hochrichtung des Grabens gegeneinander verschoben werden können. Vorzugsweise weist das erste Teil die erste Auflagefläche auf, so dass dieses am Grabenrand abgestützt werden kann. Das zweite Teil kann somit beim immer tieferen Ausgraben des Grabens allmählich abgelassen werden.

Um den Stützbügel und die Stützwände getrennt voneinander versetzen zu können, ist es vorteilhaft, wenn der Stützbügel auf die beiden Stützwände aufgesetzt ist. Der Stützbügel ist in einem jeweiligen Verbindungsbereich lösbar mit diesem verbunden. Hierbei ist der Stützbügel vorzugsweise mit den beiden Stützwänden verschraubt. Zusätzlich oder alternativ kann zwischen diesen beiden eine formschlüssige Verbindung ausgebildet sein. Der Stützbügel kann somit getrennt von den Stützwänden versetzt werden.

Vorteilhaft ist es, wenn die Trageinheit eine Absenkvorrichtung umfasst, mittels der das Rohr in den Graben absenkbar ist. Die Absenkvorrichtung ist vorzugsweise am Stützbügel angeordnet. Ferner ist es vorteilhaft, wenn die Absenkvorrichtung in Querrichtung der Trageinheit relativ zum Stützbügel verschiebbar ist. Zusätzlich oder alternativ ist es vorteilhaft, wenn die Absenkvorrichtung vorzugsweise einen insbesondere flexiblen und/oder längenverstellbaren Hubgurt umfasst. Hierdurch kann das über dem Graben gehaltene Rohr aus dem Bereich des Stützbügels in den Bereich der beiden Stützwände abgelassen werden. Die Absenkvorrichtung kann ferner derart ausgebildet sein, dass das Rohr aus einer abgesenkten Position wieder in eine angehobene Position angehoben werden kann. Hierfür kann die Absenkvorrichtung motorisch angetrieben sein.

Bislang musste der Graben, in den das Rohr abgesenkt werden soll, sehr breit ausgebildet werden, wenn der geplante Rohrverlauf nicht geradlinig, sondern gekrümmt ausgebildet ist. Um den Aushubaufwand zu reduzieren und infolgedessen den Graben möglichst schmal ausbilden zu können, ist es vorteilhaft, wenn die Trageinheit eine Ausrichtvorrichtung umfasst, mittels der das zu verlegende Rohr zum Ausrichten gegenüber dem Graben vor dem Absenken, d.h. außerhalb des Grabens, relativ zur Trageinheit bzw. zum Graben in Querrichtung verschiebbar ist. Hierdurch kann mittels der Ausrichtvorrichtung das Rohr in einem Bereich derart gebogen werden, dass dessen Verlauf dem geplanten Rohrverlegeverlauf entspricht. Infolgedessen kann der Graben sehr schmal ausgebildet werden. Die Ausrichtvorrichtung kann ferner dafür verwendet werden, das freie Rohrende vor dem Absenken relativ zu einem zu verbindenden, insbesondere zu verschweißenden, weiteren Rohrabschnitt in Querrichtung auszurichten. Vorzugsweise ist die Ausrichtvorrichtung hydraulisch betrieben. Des Weiteren ist es vorteilhaft, wenn die Ausrichtvorrichtung am Stützbügel angeordnet ist. Hierdurch kann das Rohr bereits vor dem Ablassen in die richtige Position gedrückt werden, so dass dieses in der gewünschten Lage unmittelbar über der Grabenöffnung steht und beim Ablassen problemlos in die Grabenöffnung einfädelbar ist.

In einer vorteilhaften Weiterbildung der Erfindung umfasst der Stützbügel zwei Schenkel, deren freie Enden jeweils einer der beiden Stützwände zugeordnet sind und/oder mit dieser lösbar verbunden sind. Ferner ist es vorteilhaft, wenn zwischen den beiden Schenkeln an ihren den Stützwänden abgewandten Enden ein sich zwischen diesen beiden erstreckendes Querelement angeordnet ist. Der Stützbügel kann einen im Wesentlichen U-förmigen Grundkörper aufweisen. Der Grundkörper kann bogenförmig ausgebildet sein, wobei vorzugsweise in diesem Fall das Querelement im Bereich der Biegung ausgebildet ist, oder aber auch eine eckige Form aufweisen, wobei vorzugsweise in diesem Fall die beiden Schenkel und das Querelement jeweils eine Seite des Stützbügels bilden.

In einer vorteilhaften Weiterbildung der Erfindung weist die Ausrichtvorrichtung zwei zueinander zugewandte und/oder in Querrichtung der Trageinheit verschiebbare Druckstempel auf. Die Druckstempel sind jeweils zum Ausrichten des Rohres in Querrichtung aus einer aus dem Absenkraum zurückgezogenen Neutralstellung in eine weiter in den Absenkraum hineinverschobene Druckstellung verfahrbar. In der Druckstellung kommt der jeweilige Druckstempel mit der Außenseite des Rohres in Kontakt und kann dieses in Querrichtung verschieben. Um eine Beschädigung des Rohres zu vermeiden ist es vorteilhaft, wenn die Druckstempel jeweils eine Druckfläche aufweisen, die vorzugsweise eine an die Außenkontur des Rohres angepasste konkave Form aufweist, so dass sich der über den Druckstempel auf das Rohr übertragene Druck gleichmäßig verteilt. Die Druckfläche erstreckt sich vorteilhafterweise in Hochrichtung vom Bereich des Stützbügels ausgehend bis in den Verbindungsbereich zwischen dem Stützbügel und den Stützwänden. Hierbei kann die Druckfläche oberhalb des Verbindungsbereiches oder auf Höhe des Verbindungsbereiches enden. Die Druckfläche kann sich aber über diesen hinweg bis in den Bereich der Stützwände erstrecken. Hierdurch wird das Rohr beim Ablassen von den Druckflächen zuverlässig in die Grabenöffnung geführt.

Vorteilhaft ist es, wenn in Neutralstellung der beiden Druckstempel der Abstand zwischen den beiden Druckflächen in Trageinheitsquerrichtung größer ist als der Abstand zwischen den beiden Stützwänden.

Vorgeschlagen wird ferner ein Verbausystem zum Grabenverbau für ein absenkbares Rohr. Das Verbausystem umfasst zumindest zwei in Längsrichtung des Verbausystems voneinander beabstandete Trageinheiten. Die Trageinheiten können in sich Querkräfte aufnehmen, die durch das nach innen drückende Erdreich auf das Verbausystem wirken. Des Weiteren umfasst das Verbausystem zumindest eine zwischen diesen beiden angeordnete Verbaueinheit zum Abstützen der Grabenwand. Das Verbausystem ist mittels der Trageinheiten freitragend ausgebildet. Hierfür sind die Trageinheiten gemäß der vorangegangenen Beschreibung ausgebildet, wobei die genannten Merkmale einzeln oder in beliebiger Kombination vorhanden sein können. Die Trageinheiten bilden zusammen mit der zumindest einen Verbaueinheit einen barrierefreien Absenkraum aus. Dieser erstreckt sich vorzugsweise über die gesamte Länge des Verbausystems. Hierdurch ist innerhalb des Absenkraums das dafür vorgesehene Rohr von einem außerhalb des Grabens befindlichen Bereich im Wesentlichen bis zur Grabensohle absenkbar. Des Weiteren ist es aufgrund des Grabenverbaus nunmehr unter Berücksichtigung der Arbeitsschutzverordnungen möglich, dass sich Arbeiter vor, während und/oder nach dem Ablassen des Rohres im Inneren des Grabens aufhalten.

Die Verbaueinheit umfasst zwei zumindest teilweise im Inneren des Grabens anordenbare Verbauwände. Die Verbauwände sind in Querrichtung der Verbaueinheit gegenüberliegend angeordnet und/oder voneinander beabstandet.

Vorteilhaft ist es, wenn die Verbaueinheit versetzbar ist, so dass diese beim fortschreitenden Verlegen des Rohres vom hinteren Ende des Verbausystems an das vordere Ende des Verbausystems transportiert werden kann. Hierdurch ist vorteilhafterweise nur eine beschränkte Anzahl von Verbaueinheiten und/oder Trageinheiten notwendig, um das Rohr entlang seines gesamten geplanten Verlegeverlaufs verlegen zu können.

Damit das Verbausystem auch im Bereich der Verbaueinheiten freitragend ausgebildet ist, ist es vorteilhaft, wenn die Verbaueinheiten im Bereich ihrer beiden Stirnseiten mit der jeweils benachbarten Trageinheit bzw. mit der jeweils benachbarten zusätzlichen Verbaueinheit lösbar verbunden ist. Um den barrierefreien Absenkraum sicherzustellen weist die Verbaueinheit vorzugsweise keine Querstreben auf. Durch die lösbare Verbindung im Bereich ihrer Stirnseiten werden die durch das Erdreich auf die Verbaueinheit wirkenden Querkräfte an die Trageinheiten abgeleitet, so dass das Verbausystem freitragend ausgebildet ist.

In einer vorteilhaften Weiterbildung der Erfindung sind die beiden Verbauwände der jeweiligen Verbaueinheit vollständig voneinander separiert, d.h. sie weisen keine Querverbindung bzw. Querstrebe im Bereich des Absenkraums auf. Es ist jedoch denkbar, dass die Verbaueinheit außerhalb des Absenkraums, insbesondere sohlenseitig, analog zur Trageinheit zumindest eine verlorene Querstrebe aufweist.

Dadurch, dass die beiden gegenüberliegenden Verbauwände im Bereich des Absenkraums vollständig voneinander getrennt sind, würden diese ohne zusätzliche Mittel aufgrund des nachrutschenden Erdreichs umkippen. Um die auf die Verbauwände einwirkenden Querkräfte in die Trageinheiten ableiten zu können, ist es deshalb vorteilhaft, wenn die Verbauwände jeweils im Bereich ihrer stirnseitigen Stoßflächen mit der in Längsrichtung des Verbausystems jeweils benachbarten Stützwand einer benachbarten Trageinheit und/oder benachbarten Verbauwand einer benachbarten Verbaueinheit lösbar und/oder formschlüssig verbunden sind. Hierdurch wird jede der Verbauwände durch die jeweils in Längsrichtung benachbarten Wände gehalten.

Damit die Verbauwände maximal bis zum Grabenrand abgesenkt werden können, ist es vorteilhaft, wenn diese jeweils eine zweite Auflagefläche aufweisen, mittels der die Verbauwände am Grabenrand aufsetzbar sind. Vorzugsweise ist diese zweite Auflagefläche auf der dem Absenkraum abgewandten Seite und/oder im Bereich des der Grabenöffnung zugewandten Endes der jeweiligen Verbauwand angeordnet. Die Verbauwände der Verbaueinheit weisen vorzugsweise einen im Wesentlichen L-förmigen Grundkörper bzw. Querschnitt auf.

Vorteilhaft ist es, wenn die Verbauwände jeweils zwei Verbauplatten umfassen, die zueinander in Hochrichtung des Verbausystems verschiebbar sind. Diesbezüglich ist es ferner vorteilhaft, wenn die beiden Verbauplatten durch zwei stirnseitige Führungsschienen geführt sind. Zusätzlich oder alternativ ist es ferner vorteilhaft, wenn eine der beiden Verbauplatten zum Abstützen am Grabenrand die zweite Auflagefläche aufweist. Beim tieferen Ausbaggern des Grabens kann somit die andere der beiden Verbauplatten relativ zur ersten Verbauplatte tiefer in den Graben gleiten, so dass der Graben unmittelbar nach dem Ausbaggern vollständig abgestützt ist.

In einer vorteilhaften Weiterbildung der Erfindung umfasst das Verbausystem zumindest zwei Trageinheiten, um das Rohr vor dem Absenken relativ zum Graben auszurichten. Des Weiteren ist es vorteilhaft, wenn das Verbausystem zumindest zwei, insbesondere vier, zusätzliche Trageinheiten umfasst, um das Rohrende gegenüber einem mit diesem zu verbindenden Rohrabschnitt auszurichten. Zum Abstützen des Grabens ist es ferner vorteilhaft, wenn jeweils 3 bis 4 Verbaueinheiten zwischen zwei zueinander benachbarten Trageinheiten angeordnet sind.

Vorgeschlagen wird ferner ein Verfahren zum Verlegen eines Rohres, insbesondere eines biegsamen Kunststoffrohres, bei welchem ein Graben entlang eines Grabenverlaufs ausgehoben wird. Der Grabenverlauf kann Biegungen aufweisen, denen das Rohr folgen muss. Bei dem vorgeschlagenen Verfahren wird ein Verbausystem mit mehreren versetzbaren Trageinheiten und Verbaueinheiten eingebracht. Das Verbausystem, insbesondere die Trageinheiten, ist gemäß der vorangegangenen Beschreibung ausgebildet, wobei die genannten Merkmale einzeln oder in beliebiger Kombination vorhanden sein können. Das Rohr wird in einem Absenkabschnitt innerhalb eines barrierefreien Absenkraums des Verbausystems aus einer Hubposition im Wesentlichen bis zur Grabensohle abgesenkt. Gleichzeitig wird das Rohr im Bereich des Rohrendes in einem Halteabschnitt in der Hubposition gehalten. Hierdurch können vorteilhafterweise an das noch nicht abgesenkte Rohrende außerhalb des Grabens weitere Rohrabschnitte an das Rohr angeschweißt werden. Infolgedessen müssen für diese Arbeit keine Arbeiter in den Graben hinabsteigen. Unabhängig davon können jedoch vorteilhafterweise aufgrund des in den Graben eingebrachten Verbausystems vor, während und/oder nach dem Absenken des Rohres im entsprechenden Absenkabschnitt Arbeiter im Graben sein, da dieser durch das Verbausystem gesichert ist.

Vorteilhaft ist es, wenn die im Absenkabschnitt angeordneten Trageinheiten und Verbaueinheiten nach dem Absenken des Rohres in den Halteabschnitt versetzt werden. Hierdurch muss sich das Verbausystem nicht über die gesamte Länge des geplanten Rohrverlaufs erstrecken, sondern lediglich über einen Teilabschnitt. Die jeweiligen Einheiten des Verbausystems können somit nach und nach in Richtung des weiteren Grabenverlaufs versetzt werden. Hierbei wird vorzugsweise nach und nach jeweils die das hintere Ende des Verbausystems bildende Trageinheit oder Verbaueinheit an das vordere Ende des Verbausystems versetzt. Während die Trageinheit oder Verbaueinheit am hinteren Ende des Verbausystems versetzt wird, kann in der Zwischenzeit am vorderen Ende des Verbausystems der Graben zur Aufnahme der versetzten Einheit weiter ausgebaggert werden. Beim Einsetzen der Einheit am vorderen Ende des Verbausystems kann ferner im Wesentlichen zeitgleich der Graben mit dem darin abgesenkten Rohr am hinteren Ende des Verbausystems verschüttet werden. Hierdurch kann das Rohr sehr zeiteffizient und somit kostengünstig verlegt werden.

In einer vorteilhaften Weiterbildung der Erfindung wird beim Versetzen der Trageinheit zunächst ein Stützbügel der Trageinheit in eine Zwischenparkposition versetzt. Diese Zwischenparkposition befindet sich vorzugsweise in Längsrichtung des Verbausystems hinter einer Schweißeinheit bzw. Schweißmaschine. Vorteilhaft ist es, wenn nach dem Versetzen des Stützbügels die beiden Stützwände der Trageinheit vor die Schweißmaschine an das vordere Ende des Verbausystems versetzt werden. Diesbezüglich ist es ferner vorteilhaft, wenn nach dem Versetzen der beiden Stützwände der Stützbügel aus seiner Zwischenparkposition auf die beiden Stützwände versetzt wird, insbesondere nachdem die Schweißmaschine einen weiteren Rohrabschnitt an das freie Rohrende geschweißt hat und bis zum neuen Rohrende weiterverfahren wurde. Hierdurch kann vorteilhafterweise beim Verfahren der Schweißmaschine eine Behinderung durch die Trageinheit vermieden werden.

Vorteilhaft ist es, wenn das Rohr von zumindest einer im Absenkabschnitt angeordneten Trageinheit vor dem Absenken mittels einer Ausrichtvorrichtung in Querrichtung des Grabens relativ zum Grabenverlauf ausgerichtet wird. Die Ausrichtvorrichtung ist vorzugsweise hinsichtlich ihrer Ausgestaltung und Funktionsweise gemäß der vorangegangenen Beschreibung ausgebildet, wobei die genannten Merkmale einzeln und/oder in beliebiger Kombination vorhanden sein können. Hierdurch muss der Graben nur geringfügig breiter als das zu verlegende Rohr ausgehoben werden, da dieses an den Grabenverlauf durch entsprechendes Biegen angepasst werden kann.

Des Weiteren ist es vorteilhaft, wenn der Graben vor dem Verbausystem ausgehoben und hinter diesem wieder verfüllt wird.

Weitere Vorteile der Erfindung sind in den nachfolgenden Ausführungsbeispielen beschrieben. Es zeigt:
- **Figur 1a** - **1c**: eine schematische Darstellung einer Trageinheit eines Verbausystems mit einer Ausrichtvorrichtung zum Ausrichten des zu verlegenden Rohres in Querrichtung relativ zum Graben in den Verfahrensschritten des Ausrichtens und Ablassens des Rohres,
- **Figur 2**: eine schematische Darstellung einer Verbaueinheit eines Verbausystems,
- **Figur 3**: ein Verbausystem in einer seitlichen Halbdarstellung mit mehreren lösbar miteinander verbundenen Trageinheiten und Verbaueinheiten und
- **Figur 4a** - **4i**: das Verbausystem in einer seitlichen Halbdarstellung in den einzelnen Verfahrensschritte zum Verlegen eines Rohres.

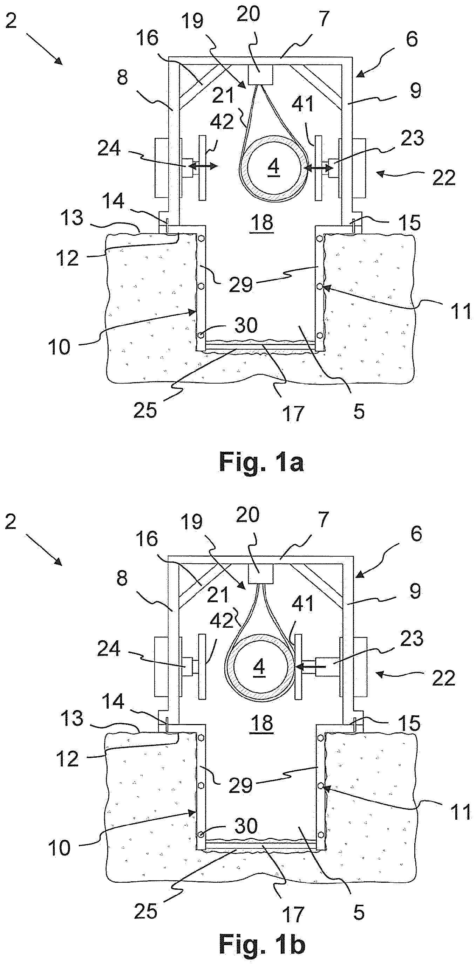

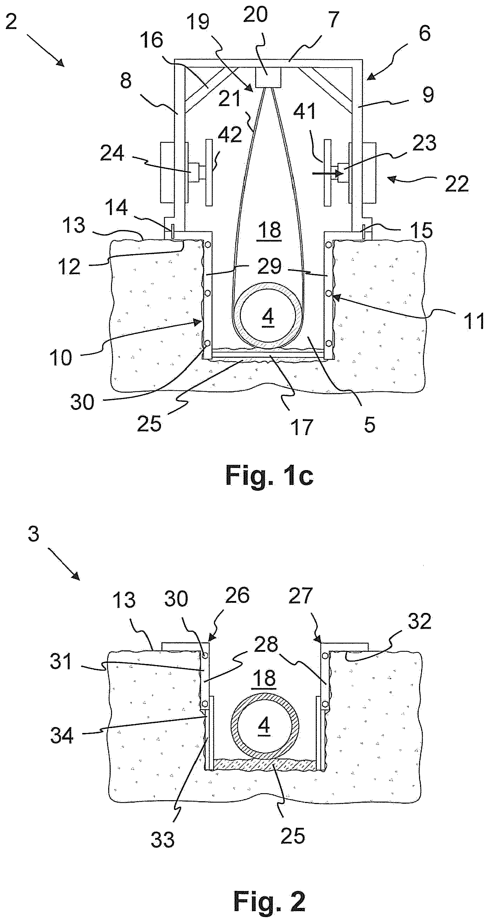

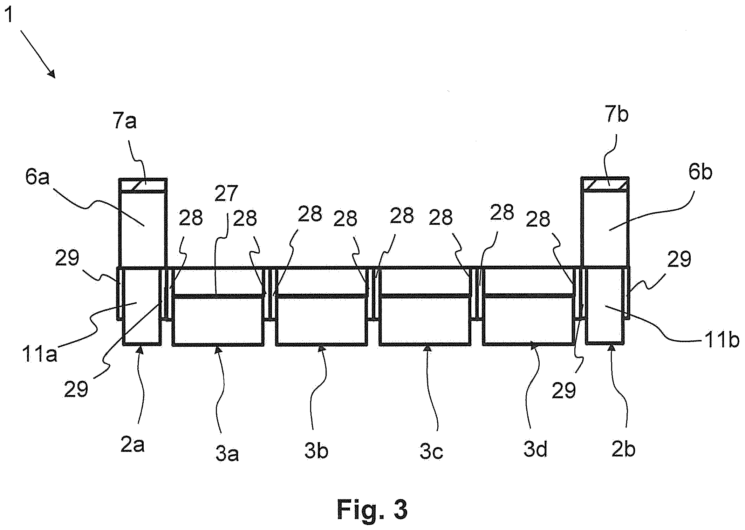

Figur 3 zeigt ein Verbausystem 1 zum Abstützen eines Grabens 5 mit mehreren in Figur 1a dargestellten Trageinheiten 2a, 2b und mehreren zwischen diesen beiden angeordneten und in Figur 2 dargestellten Verbaueinheiten 3a - 3d.

Gemäß Figur 1a umfasst die Trageinheit 2 einen Stützbügel 6. Dieser ist außerhalb des Grabens 5 angeordnet und erstreckt sich brückenartig über den Graben 5. Ein noch nicht im Graben 5 abgesenktes Rohr 4 kann somit im Bereich des Stützbügels 6 in dessen Inneren aufgenommen werden. Der Stützbügel 6 weist gemäß dem vorliegenden Ausführungsbeispiel eine eckige U-Form auf. Der Stützbügel 6 umfasst demnach ein sich quer über den Graben 5 erstreckendes Querelement 7, an dessen Enden sich jeweils ein Schenkel 8, 9 anschließt. Alternativ dazu könnte der Stützbügel 6 auch als Portalbogen ausgebildet sein, so dass die beiden Schenkel 8, 9 jeweils zumindest in einem Teilbereich eine Biegung aufweisen und/oder durch eine Biegung in das Querelement 7 übergehen. Das Querelement 7 könnte in diesem Fall als Bogenelement ausgebildet sein.

Neben dem Stützbügel 6 umfasst die Trageinheit 2 des Weiteren zwei Stützwände 10, 11, die jeweils an einer Seite des Grabens 5 angeordnet sind. In Grabenquerrichtung sind die beiden Stützwände 10, 11 somit voneinander beabstandet, so dass das Rohr 4 zwischen diesen beiden abgelassen werden kann. Die Stützwände 10, 11 weisen jeweils eine erste Auflagefläche 12 auf, mittels der diese am Grabenrand 13 aufgesetzt werden können. Hierdurch können die beiden Stützwände 10, 11 jeweils bis zu einer durch ihre jeweilige erste Auflagefläche 12 festgelegte Tiefe in den Graben 5 eingebracht werden.

Die beiden Stützwände 10, 11 stellen demnach zwei vollständig voneinander getrennte Baueinheiten der Trageinheit 2 dar. Damit die beiden Stützwände 10, 11 die durch das Erdreich einwirkenden Querkräfte aufnehmen können, sind diese in einem jeweiligen Verbindungsbereich 14, 15 mit dem Querkräfte aufnehmenden Stützbügel 6 verbunden. Um den Stützbügel 6 und die Stützwände 10, 11 getrennt voneinander versetzen zu können, ist der Stützbügel 6 lösbar mit der jeweiligen Stützwand 10, 11 verbunden. Der Stützbügel 6 bildet somit zusammen mit den beiden Stützwänden 10, 11 eine lediglich im Bereich der Grabensohle offene Tragstruktur aus. Diese ist derart steif ausgebildet, dass sie die durch das Erdreich auf die Trageinheit 2 wirkenden Querkräfte aufnehmen kann.

Zur Erhöhung der Steifigkeit kann der Stützbügel 6 zusätzliche Versteifungen 16 aufweisen, die ein nach innen Klappen der Schenkel 8, 9 bzw. der in deren Verlängerung angeordneten Stützwände 10, 11 vermeiden. Zur zusätzlichen Versteifung im Bereich der Grabensohle bzw. der Strukturöffnung kann die Trageinheit 2 eine Stützstrebe 17 umfassen. Die Stützstrebe 17 ist im Bereich der grabensohlenseitigen Enden der beiden Stützwände 10, 11 angeordnet. Vorzugsweise handelt es sich bei der Stützstrebe 17 um eine Holzsteife, da die Stützstrebe als verlorene Stützstrebe ausgebildet ist und beim Versetzen der Trageinheit 2 im Graben 5 verbleibt. Die Stützstrebe 17 ist zwischen den beiden Stützwänden 10, 11 verpresst. Des Weiteren ist die Stützstrebe vor dem Ablassen des Rohres 4 mit Flüssigboden 25 bedeckt.

Gemäß der vorangegangenen Beschreibung ist die Trageinheit 2 somit selbsttragend ausgebildet. Neben dieser Eigenschaft weist die Trageinheit 2 des Weiteren einen barrierefreien Absenkraum 18 auf. Dieser ist in der in Figur 1a dargestellten Querschnittsansicht im Inneren der Trageinheit 2 ausgebildet und erstreckt sich vom Bereich des Stützbügels 6, d.h. außerhalb des Grabens 5, bis in den Bereich der beiden gegenüberliegenden Stützwände 10, 11, d.h. bis ins Innere des Grabens 5. Hierdurch kann das Rohr 4 aus der in Figur 1a dargestellten außerhalb des Grabens 5 angeordneten Position innerhalb des barrierefreien Absenkraums 18 bis in die in Figur 1c dargestellte abgelassene Position in den Graben 5 eingebracht werden.

Zum Halten, Ablassen und/oder Anheben des Rohres 4 weist die Trageinheit 2 eine Absenkvorrichtung 19 auf. Diese umfasst einen Hubgurt 21, der sich um das Rohr 4 erstreckt. Des Weiteren umfasst die Absenkvorrichtung 19 einen Antrieb 20, mittels dem die Länge des Hubgurtes 21 zum Absenken des Rohres 4 veränderbar ist. Die Absenkvorrichtung 19 ist im Bereich des Querelementes 7 angeordnet. Die Absenkvorrichtung 19 kann relativ zum Stützbügel 6 ortsfest ausgebildet sein oder aber auch in Grabenquerrichtung relativ zum Stützbügel 6 verschiebbar sein. Hierbei kann die Absenkvorrichtung 19 gemäß einer ersten Ausführungsform frei gelagert sein, so dass sich deren Position an die Rohrposition anpasst. Alternativ ist es aber auch ebenso denkbar, dass die Absenkvorrichtung 19 in Querrichtung motorisch verfahrbar und/oder arretierbar ist.

Der Verlegeverlauf dem das Rohr folgen soll, ist in der Regel nicht über seine gesamte Länge hinweg geradlinig, sondern weist Kurven und Biegungen auf. Um den Aushubaufwand möglichst gering zu halten, ist es vorteilhaft, wenn der Graben 5 im Wesentlichen diesem gekrümmten Verlegeverlauf folgend ausgebaggert wird. Problematisch ist jedoch hierbei, dass das abzusenkende Rohr 4 gemäß Figur 1a dann nicht über dem Graben 5 angeordnet ist, sondern zu diesem versetzt ist. Dieser Versatz kann im Vergleich zu dem dargestellten Versatz noch viel größer sein, insbesondere derart groß, dass sich das Rohr 4 vollständig neben dem Graben 5 befindet. In diesem Fall würde der Stützbügel entsprechend größer dimensioniert sein, insbesondere eine entsprechend größere Breite aufweisen.

Wenn das Rohr 4 relativ zum Graben 5 entsprechend stark in Querrichtung versetzt ist, kann das Rohr 4 nicht in den Graben 5 abgelassen werden. Um das Rohr 4 relativ zum Graben 5 in Grabenquerrichtung ausrichten zu können, umfasst die Trageinheit 2 deshalb eine Ausrichtvorrichtung 22. Die Ausrichtvorrichtung 22 ist außerhalb des Grabens 5 im Bereich des Stützbügels 6 angeordnet. Die Ausrichtvorrichtung 22 umfasst zwei sich gegenüberliegende Druckstempel 23, 24, die aus einer in Figur 1a dargestellten Neutralstellung in eine weiter in den Absenkraum 18 hineinverschobene Druckstellung verfahrbar sind (vgl. Figur 1b). Die beiden Druckstempel 23, 24 weisen jeweils eine Druckfläche 41, 42 auf, über die in Grabenquerrichtung eine Verschiebekraft auf das Rohr 4 aufgebracht werden kann, so dass die Rohrposition in Grabenquerrichtung veränderbar ist. Die Druckflächen 41, 42 sind in Hochrichtung von den Stützwänden 10, 11 beabstandet. Alternativ könnten diese aber auch an den Stützwänden 10, 11 enden oder sich teilweise in den Graben hineinerstrecken.

Gemäß dem in Figur 1a dargestellten Beispiel ist das Rohr 4 relativ zum Graben 5 nach rechts verschoben. Um es wieder in Position zu bringen, wird gemäß Figur 1b der erste Druckstempel 23 der Ausrichtvorrichtung 22 aus seiner in Figur 1a dargestellten Neutralstellung in die in Figur 1b dargestellte Druckstellung verfahren. Hierbei wird der erste Druckstempel 23 soweit in den Absenkraum 18 hineinverschoben, bis das Rohr 4 gegenüber dem Graben 5 ausgerichtet ist. Anschließend wird das Rohr 4 mittels der Absenkvorrichtung 19 gemäß Figur 1c in den Graben abgelassen. Während des Ablassens wird mittels der Ausrichtvorrichtung 22 die ausgerichtete Position des Rohres 4 gehalten und das Rohr 4 mittels der Druckfläche 41 in Hochrichtung zur Grabenöffnung geführt, so dass das Rohr 4 in die Grabenöffnung einfädelt. Anschließend kann der Druckstempel 23 gemäß Figur 1c wieder in seine Neutralstellung zurückgefahren werden. Zum sicheren Einfädeln des Rohres beim Ablassen ist es vorteilhaft, wenn sich die Druckflächen 41, 42 der Druckstempel 23, 24 in Hochrichtung der Trageinheit 2 im Wesentlichen bis zur Grabenöffnung erstrecken. Hierdurch kann eine sichere Übergabe vom Druckstempel 23, 24 an die Stützwände 10, 11 erfolgen.

Nach dem Ablassen des Rohres 4 auf die Grabensohle wird der Hubgurt 21 vom Rohr 4 entfernt. Danach kann die Trageinheit 2 an eine in Bezug auf den geplanten Rohrverlauf weiter vorgelagerte Position versetzt werden. Hierfür wird zunächst der Stützbügel 6 von den beiden Stützwänden 10, 11 gelöst und von diesem mittels eines Transportvorrichtung, insbesondere eines verfahrbaren Portalkranzes oder eines Transportfahrzeuges, abgehoben und an die neue Position transportiert. Danach wird jede der beiden Stützwände 10, 11 aus dem Graben 5 entfernt und an die neue Position versetzt. Einzig und allein die Stützstrebe 17 verbleibt im Inneren des Grabens 5 und wird zusammen mit dem Rohr 4 verschüttet.

Figur 2 zeigt eine der Verbaueinheiten 3a - 3d des Verbausystems 1. Die Verbaueinheit 3 umfasst eine erste Verbauwand 26, die an der einen Seite des Grabens 5 angeordnet ist, und eine zweite Verbauwand 27, die an der gegenüberliegenden Seite des Grabens 5 angeordnet ist. Die beiden Verbauwände 26, 27 sind in Grabenquerrichtung voneinander beabstandet und bilden zwischen sich einen sich von der Grabenöffnung bis zur Grabensohle erstreckenden barrierefreien Absenkraum 18 aus. Die beiden Verbauwände 26, 27 weisen demnach innerhalb des barrierefreien Absenkraums 18 keine Stützstreben zur Aufnahme von Querkräften auf.

Damit die beiden Verbauwände 26, 27 nicht in den barrierefreien Absenkraum 18 durch nachrutschendes Erdreich hineingedrückt werden, weisen diese jeweils an ihren beiden Stirnseiten einen ersten Befestigungsbereich 28 auf. In diesem ersten Befestigungsbereich 28 ist eine jede der beiden Verbauwände 26, 27 mit einer jeweils dazu benachbarten Verbauwand einer benachbarten Verbaueinheit 3 oder einer benachbarten Stützwand 10 einer benachbarten Trageinheit 2 lösbar verbindbar. Hierfür weisen die Trageinheiten 2, insbesondere die beiden Stützwände 10, 11, gemäß Figur 1a stirnseitig einen mit dem ersten Befestigungsbereich 28 korrespondierenden jeweiligen zweiten Befestigungsbereich 29 auf. Die Trageinheiten 2 und die Verbaueinheiten 3 weisen in ihren jeweiligen Befestigungsbereichen 28, 29 mehrere Befestigungsmittel 30 auf, so dass diese stirnseitig lösbar miteinander verbunden werden können. Die erste Verbauwand 26 wird demnach durch die stirnseitige Verbindung mit der benachbarten ersten Stützwand 10 in Querrichtung gehalten. Analog wird die zweite Verbauwand 27 der Verbaueinheit 3 von der zweiten Stützwand 11 über die stirnseitige lösbare Verbindung zwischen diesen beiden gehalten.

Gemäß Figur 2 umfasst jede der beiden Verbauwände 26, 27 eine grabenöffnungsseitige erste Verbauplatte 31. Des Weiteren umfasst jede der beiden Verbauwände 26, 27 eine zweite Auflagefläche 32, mittels der die jeweilige Verbauwand 26, 27 am Grabenrand 13 aufsetzbar ist. Die zweite Auflagefläche 32 ist an der ersten Verbauplatte 31 angeordnet, so dass diese bis zu einer durch die zweite Auflagefläche 32 definierte Tiefe in den Graben 5 eindringen kann.

Neben der ersten Verbauplatte 31 umfasst jede der beiden Verbauwände 26, 27 jeweils eine zweite Verbauplatte 33. Die zweite Verbauplatte 33 ist gegenüber der zugeordneten ersten Verbauplatte 31 in Hochrichtung verschiebbar. Hierdurch kann die zweite Verbauplatte 33 beim tieferen Ausbaggern des Grabens 5 immer tiefer in diesen hineingleiten, so dass die Grabenwände stets gesichert sind. Die Verbauwände 26, 27 können stirnseitig Führungsschienen 34 aufweisen, in denen die zweite Verbauplatte 33 in Hochrichtung verschiebbar gelagert ist.

In einem hier nicht dargestellten Ausführungsbeispiel können die in Figur 1a bis 1c dargestellten Stützwände 11a, 11b der Trageinheit 2 wie die in Figur 2 dargestellten Verbauwänden 26, 27 der Verbaueinheit 3 zweiteilig ausgebildet sein und infolgedessen jeweils eine erste Verbauplatte 31 und eine zweite Verbauplatte 33 umfassen. Die beiden Verbauplatten 31, 33 der Trageinheit 2 sind dann schienengeführt in Hochrichtung des Grabens gegeneinander verschiebbar. Die auf die Verbaueinheit 3 bezogenen vorstehende Beschreibung ist demnach im Hinblick auf diesen Aspekt auch auf die Stützwände 11a, 11b der Trageinheit 2 übertragbar.

Figur 3 zeigt das Verbausystem 1 mit einer ersten Trageinheit 2a und einer zweiten Trageinheit 2b im Längsschnitt. Zwischen den beiden in Längsrichtung voneinander beabstandeten Trageinheiten 2a, 2b sind mehrere Verbaueinheiten 3a - 3d angeordnet. Aufgrund der Schnittansicht ist in Figur 3 jeweils lediglich eine der beiden Verbauwände 27 einer jeden Verbaueinheit 3a - 3d ersichtlich, wobei aus Gründen der Übersichtlichkeit lediglich eine mit einem Bezugszeichen versehen ist. Gleiches trifft auf die beiden Trageinheiten 2a, 2b zu, so dass auch in ihrem Fall lediglich eine der beiden Stützwände 11a, 11b ersichtlich ist.

Die erste Verbaueinheit 3a ist in ihrem Befestigungsbereich 28 stirnseitig mit der ersten Trageinheit 2a in deren Befestigungsbereich 29 lösbar verbunden. Auf ihrer der ersten Trageinheit 2a abgewandten Seite ist die erste Verbaueinheit 3a mit der zweiten Verbaueinheit 3b lösbar verbunden. Auch dies erfolgt stirnseitig in ihren jeweiligen miteinander korrespondierenden Befestigungsbereichen 28. Auch die übrigen Verbaueinheiten 3b, 3c, 3d sind mit der jeweils benachbarten Verbaueinheit 3b, 3c, 3d und/oder benachbarten Trageinheit 2b in ihren jeweiligen Befestigungsbereich 28, 29 lösbar verbunden.

Die in Figur 3 dargestellten Verbauwände 27 und Stützwände 11a, 11b bilden somit eine den Graben 5 einseitig abstützende durchgängige Wand. Die durch das Erdreich auf die Verbauwände 27 der Verbaueinheiten 3a - 3d und Stützwände 11 der Trageinheiten 2a, 2b wirkenden Querkräfte werden über die beiden Stützbügel 6a, 6b der Trageinheiten 2a, 2b aufgenommen und gegenüber der vorliegend nicht dargestellten anderen Hälfte des Verbausystems 1 abgestützt. Hierbei werden beidseitig die abzufangenden Querkräfte in den Querelementen 7a, 7b der beiden Trageinheiten 2a, 2b aufgenommen. Das in Figur 3 dargestellte Verbausystem 1 ist somit freitragend ausgebildet und weist zugleich einen zwischen den Trageinheiten 2a, 2b und Verbaueinheiten 3a - 3d in Hochrichtung des Verbausystems 1 ausgebildeten barrierefreien Absenkraum 18 auf, der sich über die gesamte Länge des Verbausystems 1 erstreckt und innerhalb dem das Rohr 4 vom Bereich der Stützbügel 6a, 6b bis in den Bereich der Stützwände 11a, 11b und Verbauwände 27 absenkbar ist.

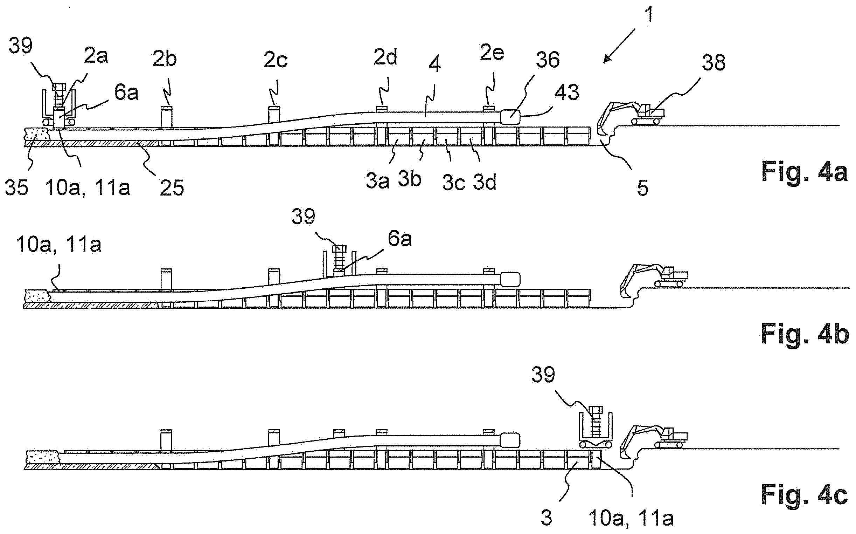

In den Figuren 4a - 4i sind die einzelnen Verfahrensschritte zum Verlegen des Rohres 4 entlang eines gebogenen Grabenverlaufs visualisiert. Gemäß Figur 4a umfasst das Verbausystem 1 fünf Trageinheiten 2a - 2e zwischen denen jeweils eine Gruppe von vier Verbaueinheiten 3a - 3d angeordnet ist. Aus Gründen der Übersichtlichkeit sind nicht alle Verbaueinheiten 3 mit Bezugszeichen versehen.

Gemäß Figur 4a ist das Rohr 4 im Bereich der ersten und zweiten Trageinheit 2a, 2b bereits in den Graben 5 abgelassen. Hierbei liegt das Rohr 4 auf einem in den Graben 5 eingebrachten Flüssigboden 25 auf. Hinter der ersten Trageinheit 2a ist das Rohr 4 bereits mit Erde 35 verschüttet. Von der zweiten Trageinheit 2b ausgehend in Richtung des freien Rohrendes 43 erstreckt sich das Rohr 4 aus dem Graben 5 heraus. Hierbei wird das Rohr 4 von der dritten, vierten und fünften Trageinheit 2c, 2d, 2e mittels ihrer jeweiligen vorliegend nicht dargestellten Absenkvorrichtung 19 gehalten (vgl. Fig. 1a).

Gemäß Figur 4a befindet sich im Bereich des Rohrendes 43 eine Schweißeinheit 36 mittels der ein weiterer Rohrabschnitt 37 an das Rohrende angeschweißt werden kann. Die Schweißeinheit 36 ist in Grabenlängsrichtung verfahrbar. Am Ende des Grabens 5 befindet sich ein Bagger 38 mit dem der Graben 5 entlang seines zumindest bereichsweise gekrümmten Verlaufs ausgebaggert wird. Des Weiteren umfasst die Vorrichtung zum Durchführen des Verlegeverfahrens gemäß Figur 4a eine Versetzvorrichtung 39, mittels der die Trageinheiten 2a - 2e und Verbaueinheiten 3a - 3d vom hinteren Ende des Verbausystems 1 zu dessen vorderen Ende versetzbar sind. Die Versetzvorrichtung 39 kann hierbei ein Portalkran oder aber auch ein Transportfahrzeug sein.

Gemäß Figur 4b wird zunächst der hinterste Stützbügel 6a der ersten Trageinheit 2a mittels der Versetzvorrichtung 39 in eine Zwischenparkposition versetzt. Diese befindet sich hinter der Schweißeinheit 36, da diese den Stützbügel 6a aufgrund ihrer Größe nicht passieren kann.

Danach werden die beiden Stützwände 10a, 11a der ersten Trageinheit 2a gemäß Figur 4c vom hinteren Ende des Verbausystems 1 an das vordere Ende versetzt. Nach dem Versetzen werden die beiden Stützwände 10a, 11a mit der dazu benachbarten Verbaueinheit 3 lösbar verbunden. Des Weiteren wird der Graben am hinteren Ende weiter verfüllt.

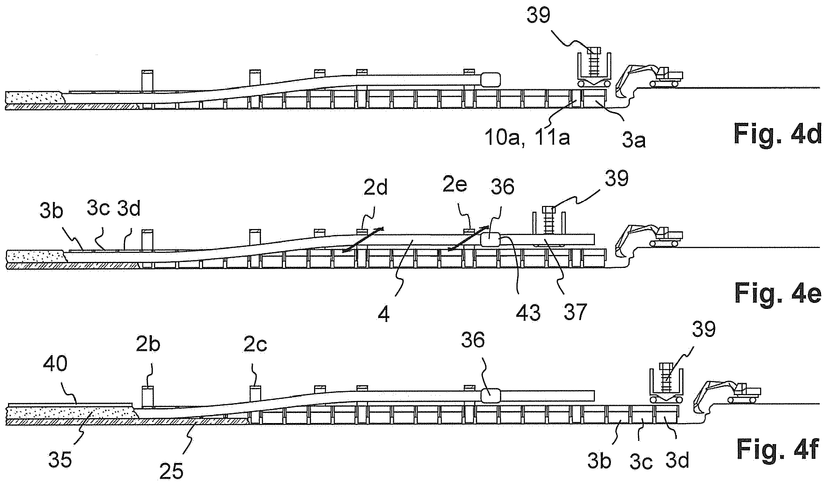

Anschließend wird gemäß Figur 4d die hinterste Verbaueinheit 3a an das vorderste Ende des Verbausystems 1 versetzt und mit den dazu benachbarten Stützwänden 10a, 11a der bislang erst teilweise versetzten Trageinheit 2a lösbar verbunden.

In dem in Figur 4e dargestellten Verfahrensschritt wird das Rohr 4 um einen weiteren Rohrabschnitt 37 verlängert. Hierfür wird von der Versetzvorrichtung 39 ein weiterer Rohrabschnitt 37 aus einem Rohrlager geholt und an das freie Rohrende 43 des Rohres 4 angesetzt. Vor dem Verschweißen kann das Rohr 4, wie durch die Pfeile angedeutet, mit der vierten und fünften Trageinheit 2d, 2e in Querrichtung gegenüber dem Rohrabschnitt 37 ausgerichtet werden. Dies erfolgt, wie vorstehend beschrieben, mit den vorliegend nicht dargestellten Ausrichtvorrichtungen 22 der jeweiligen Trageinheit 2d, 2e (vgl. Fig. 1a).

Während die Schweißeinheit 36 den weiteren Rohrabschnitt 37 an das freie Rohrende 43 des Rohrs 4 anschweißt, werden gemäß Figur 4f von der Versetzvorrichtung 39 die restlichen hinteren Verbaueinheiten 3b, 3c, 3d nacheinander vom hinteren Ende an das vordere Ende versetzt und mit der jeweils benachbarten Einheit verbunden. Während dessen wird am hinteren Ende des Verbausystems 1 das Rohr 4 fortlaufend mit Erde 35 verschüttet sowie mit einer oberen Schotterschicht 40 bedeckt. Des Weiteren wird zwischen der zweiten Trageinheit 2b und der dritten Trageinheit 2c, in denen das Rohr 4 noch nicht abgelassen ist, der Graben 5 mit dem Flüssigboden 25 versehen.

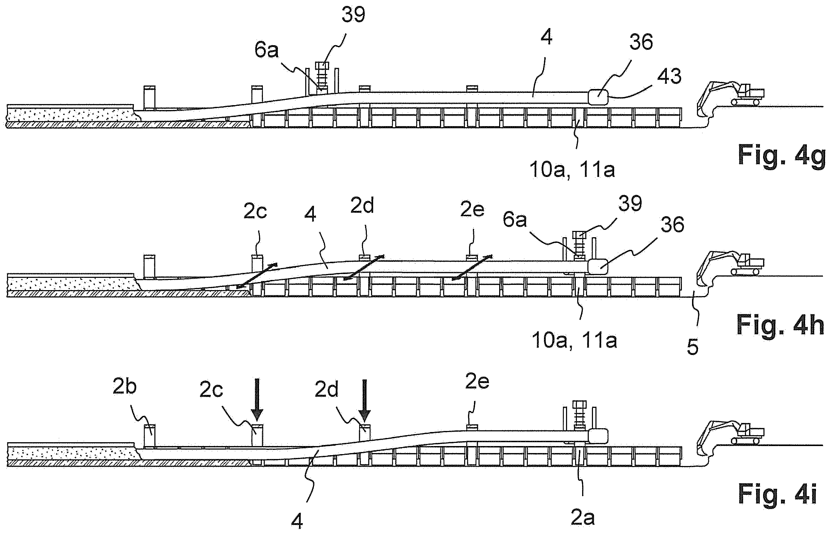

Danach wird gemäß Figur 4g die Schweißeinheit 36 an das neue freie Rohrende 43 verfahren. Die Schweißeinheit 36 befindet sich nun vor den beiden Stützwänden 10a, 11a der bislang nur teilweise versetzten ersten Trageinheit 2a. Des Weiteren bewegt sich zur gleichen Zeit die Versetzvorrichtung 39 in die Zwischenparkposition, in der der Stützbügel 6a der ersten Trageinheit 2a geparkt ist.

Anschließend wird der Stützbügel 6a gemäß Figur 4h aus der Zwischenparkposition in die Position der zu diesen gehörenden Stützwände 10a, 11a versetzt und mit diesen verbunden.

Um das Rohr 4 vor dem Absenken in Querrichtung relativ zum Graben 5 auszurichten, wird das Rohr 4 gemäß Figur 4h durch die Trageinheiten 2c, 2d, 2e mittels der vorliegend nicht dargestellten Ausrichtvorrichtungen 22 in Grabenquerrichtung verschoben, so dass das Rohr 4 über der Grabenöffnung angeordnet ist (vgl. Figur 1a, 1b). Nach dem das Rohr 4 relativ zum Graben 5 ausgerichtet wurde, kann dieses gemäß Figur 4i, wie durch die Pfeile angedeutet, abgelassen werden. Dies erfolgt gemäß dem vorliegenden Ausführungsbeispiel im Bereich der dritten und vierten Trageinheit 2c, 2d. Nach dem Ausrichten und Ablassen des Rohres 4 erfolgt das Versetzen der zweiten Trageinheit 2b, wobei die in den Figuren 4a - 4i genannten Verfahrensschritte in analoger Weise abgearbeitet werden.

Die Anzahl der Trageinheiten 2 und Verbaueinheiten 3 sind aus darstellungstechnischen Gründen reduziert. Vorzugsweise umfasst das Verbausystem 1 sechs Trageinheiten 2, wobei vorzugsweise zumindest zwei dieser Trageinheiten 2 vorgesehen sind, um das Rohr 4 vor dem Absenken gegenüber dem Graben 5 auszurichten und vier Trageinheiten 2 dafür vorgesehen sind, um das freie Rohrende 43 gegenüber dem mit diesem zu verbindenden Rohrabschnitt 37 auszurichten. Des Weiteren sind zwischen den jeweiligen Trageinheiten 2 mindestens drei, vorzugsweise vier, Verbaueinheiten 3 angeordnet.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Verbausystem
- 2: Trageinheiten
- 3: Verbaueinheiten
- 4: Rohr
- 5: Graben
- 6: Stützbügel
- 7: Querelement
- 8: Erster Schenkel
- 9: Zweiter Schenkel
- 10: erste Stützwand
- 11: zweite Stützwand
- 12: erste Auflagefläche
- 13: Grabenrand
- 14: Erster Verbindungsbereich
- 15: Zweiter Verbindungsbereich
- 16: Versteifungen
- 17: Stützstrebe
- 18: barrierefreier Absenkraum
- 19: Absenkvorrichtung
- 20: Antrieb
- 21: Hubgurt
- 22: Ausrichtvorrichtung
- 23: erster Druckstempel
- 24: zweiter Druckstempel
- 25: Flüssigboden
- 26: erste Verbauwand
- 27: zweite Verbauwand
- 28: erster Befestigungsbereich
- 29: zweiter Befestigungsbereich
- 30: Befestigungsmittel
- 31: Erste Verbauplatte
- 32: zweite Auflagefläche
- 33: Zweite Verbauplatte
- 34: Führungsschiene
- 35: Erde
- 36: Schweißeinheit
- 37: Rohrabschnitt
- 38: Bagger
- 39: Versetzvorrichtung
- 40: Schotterschicht
- 41: Erste Druckfläche
- 42: Zweite Druckfläche
- 43: Freies Rohrende

## Patentansprüche

1. Trageinheit (2) für ein freitragendes Verbausystem (1) mit einem zumindest teilweise außerhalb eines Grabens (5) anordenbaren Stützbügel (6), der sich in der vorgesehenen Verbaulage brückenartig über ein außerhalb und/oder oberhalb des Grabens (5) anordenbares und in den Graben (5) absenkbares Rohr (4) erstreckt,
**dadurch gekennzeichnet,**
**dass** die Trageinheit (2) zwei zumindest teilweise im Inneren des Grabens (5) anordenbare und in Querrichtung der Trageinheit (2) voneinander beabstandete Stützwände (10, 11) umfasst,
**dass** sich die Stützwände (10, 11) jeweils an eines der beiden Enden des Stützbügels (6) anschließen,
**dass** der Stützbügel (6) in einem jeweiligen Verbindungsbereich (14, 15) lösbar mit den beiden Stützwänden (10, 11) verbunden ist und dass der Stützbügel (6) und die beiden Stützwände (10, 11) zusammen einen barrierefreien Absenkraum (18) bilden, innerhalb dem das dafür vorgesehene Rohr (4) vom Bereich des Stützbügels (6) in den Bereich der Stützwände (10, 11) absenkbar ist.

2. Trageinheit nach dem vorherigen Anspruch, **dadurch gekennzeichnet, dass** die Trageinheit (2) eine Stützstrebe (17), insbesondere eine Holzsteife, umfasst,
die sich grabensohlenseitig im Bereich der dem Stützbügel (6) abgewandten Enden der beiden Stützwände (10, 11) zwischen diesen erstreckt.

3. Trageinheit nach einem oder mehreren der vorherigen Ansprüche,
**dadurch gekennzeichnet, dass** der Stützbügel (6) und die Stützwände (10, 11) versetzbar sind und/oder
die Stützstrebe (17) als verlorene Stützstrebe ausgebildet ist, wobei diese im bestimmungsgemäßen Gebrauch im Graben (5) verbleibt.

4. Trageinheit nach einem oder mehreren der vorherigen Ansprüche,
**dadurch gekennzeichnet, dass** die Stützwände (10, 11) jeweils eine erste Auflagefläche (12) aufweisen, mittels der die Stützwände (10, 11) am Grabenrand aufsetzbar sind, wobei diese erste Auflagefläche (12) vorzugsweise auf der dem Absenkraum (18) abgewandten Seite und/oder im Bereich des dem Stützbügel (6) zugewandten Endes der Stützwände (10, 11) angeordnet sind, so dass die Stützwände (10, 11) einen im Wesentlichen L-förmigen Querschnitt aufweisen.

5. Trageinheit nach einem oder mehreren der vorherigen Ansprüche,
**dadurch gekennzeichnet, dass** der Stützbügel (6) auf die beiden Stützwände (10, 11) aufgesetzt ist.

6. Trageinheit nach einem oder mehreren der vorherigen Ansprüche,
**dadurch gekennzeichnet, dass** die Trageinheit (2) eine am Stützbügel (6) angeordnete Absenkvorrichtung (19) umfasst, mittels der das Rohr (4) in den Graben (5) absenkbar ist, wobei die Absenkvorrichtung (19) vorzugsweise einen flexiblen und/oder längenverstellbaren Hubgurt (21) umfasst.

7. Trageinheit nach einem oder mehreren der vorherigen Ansprüche,
**dadurch gekennzeichnet, dass** die Trageinheit (2) eine, insbesondere hydraulische und/oder am Stützbügel (6) angeordnete, Ausrichtvorrichtung (22) umfasst, mittels der das zu verlegende Rohr (4) zum Ausrichten gegenüber dem Graben (5) und/oder zu einem zu verbindenden Rohrabschnitt (37) außerhalb des Grabens (5) relativ zur Trageinheit (2) in Querrichtung verschiebbar ist.

8. Trageinheit nach einem oder mehreren der vorherigen Ansprüche,
**dadurch gekennzeichnet, dass** die Ausrichtvorrichtung (22) zwei zueinander zugewandte und/oder in Querrichtung der Trageinheit (2) verschiebbare Druckstempel (23, 24) aufweist und/oder dass die Druckstempel (23, 24) jeweils zum Ausrichten des Rohres (4) aus einer zurückgezogenen Neutralstellung in eine weiter in den Absenkraum (18) hineinverschobene Druckstellung verfahrbar sind.

9. Verbausystem (1) zum Grabenverbau für ein absenkbares Rohr (4) mit
zumindest zwei in Längsrichtung des Verbausystems voneinander beabstandeten Trageinheiten (2a, 2b) zur Aufnahme von Querkräften, die jeweils einen zumindest teilweise außerhalb eines Grabens (5) anordenbaren Stützbügel umfassen, der sich in der vorgesehenen Verbaulage brückenartig über ein außerhalb und/oder oberhalb des Grabens (5) anordenbares und in den Graben (5) absenkbares Rohr (4) erstreckt, und
zumindest einer zwischen diesen beiden Trageinheiten (2a, 2b) angeordneten Verbaueinheit (3a bis 3d) zum Abstützen der Grabenwand, die zwei zumindest teilweise im Inneren des Grabens (5) anordenbare Verbauwände (26, 27) umfasst, die in Querrichtung der Verbaueinheit (3a bis 3d) voneinander beabstandet sind,
**dadurch gekennzeichnet,**
**dass** das Verbausystem (1) mittels der nach einem oder mehreren der vorherigen Ansprüche ausgebildeten Trageinheiten (2a, 2b) freitragend ausgebildet ist und
**dass** die Trageinheiten (2a, 2b) zusammen mit der zumindest einen Verbaueinheit (3a bis 3d) einen barrierefreien Absenkraum (18) ausbilden, innerhalb dem das dafür vorgesehene Rohr (4) von einem außerhalb des Grabens (5) befindlichen Bereich bis zur Grabensohle absenkbar ist.

10. Verbausystem nach dem vorherigen Anspruch, **dadurch gekennzeichnet, dass** die Verbaueinheit (3a bis 3d) versetzbar ist und/oder im Bereich ihrer beiden Stirnseiten mit der jeweils benachbarten Trageinheit (2) oder einer weiteren Verbaueinheit (3a bis 3d) lösbar verbunden ist.

11. Verbausystem nach einem oder mehreren der vorherigen Ansprüche,
**dadurch gekennzeichnet, dass** die zwei Verbauwände (26, 27) in Querrichtung der Verbaueinheit (3a bis 3d) voneinander vollständig separiert sind.

12. Verbausystem nach einem oder mehreren der vorherigen Ansprüche,
**dadurch gekennzeichnet, dass** die Verbauwände (26, 27) im Bereich ihrer stirnseitigen Stoßflächen mit der in Längsrichtung des Verbausystems jeweils benachbarten Stützwand (10, 11) der Trageinheit (2) oder Verbauwand (26, 27) einer benachbarten Verbaueinheit (3a bis 3d) lösbar und/oder formschlüssig verbunden sind.

13. Verbausystem nach einem oder mehreren der vorherigen Ansprüche,
**dadurch gekennzeichnet, dass** die Verbauwände (26, 27) jeweils eine zweite Auflagefläche (32) aufweisen, mittels der diese am Grabenrand aufsetzbar sind.

14. Verfahren zum Verlegen eines Rohres (4), insbesondere eines biegsamen Kunststoffrohres, bei welchem
ein Graben (5) entlang eines Grabenverlaufs ausgehoben wird,
**dadurch gekennzeichnet,**
**dass** ein nach einem oder mehreren der Ansprüche 9-13 ausgebildetes Verbausystem (1) mit mehreren versetzbaren Trageinheiten (2a, 2b) und Verbaueinheiten (3a bis 3d) eingebracht wird,
**dass** das Rohr (4) in einem Absenkabschnitt innerhalb eines barrierefreien Absenkraums (18) des Verbausystems aus einer Hubposition im Wesentlichen bis zur Grabensohle abgesenkt und
gleichzeitig im Bereich des Rohrendes in einem Halteabschnitt in der Hubposition gehalten wird.

15. Verfahren nach dem vorherigen Anspruch, **dadurch gekennzeichnet, dass** die im Absenkabschnitt angeordneten Trageinheiten (2a, 2b) und Verbaueinheiten (3a bis 3d) nach dem Absenken des Rohres (4) in den Halteabschnitt versetzt werden, wobei vorzugsweise nach und nach jeweils die das hintere Ende des Verbausystems bildende Trageinheit (2) oder Verbaueinheit (3a bis 3d) an das vordere Ende des Verbausystems versetzt wird.

## Claims

1. Support unit (2) for a self-supporting installation system (1) having a support yoke (6) for disposing at least partially outside of a trench (5) and extending in the intended installed position in a bridge-like manner above a pipe (4) for disposing outside of and/or inside of the trench (5) and for lowering into the trench (5),
**characterized in that**
the support unit (2) comprises two support walls (10, 11) for disposing at least partially in the interior of the trench (5) and spaced apart from each other in the transverse direction of the support unit (2),
that the support walls (10, 11) each connect to one of the two ends of the support yoke (6),
that the support yoke (6) is releasably connected to the two support walls (10, 11) in a connecting region (14, 15) for each, and
that the support yoke (6) and the two support walls (10, 11) together form a barrier-free lowering space (18) within which the pipe (4) intended therefore can be lowered from the region of the support yoke (6) into the region of the support walls (10, 11).

2. The support unit according to the preceding claim, **characterized in that** the support unit (2) comprises a support strut (17), particularly a wooden brace,
extending on the trench base side in the region of the ends of the two support walls (10, 11) facing away from the support yoke (6) and between the same.

3. The support unit according to any one or more of the preceding claims, **characterized in that** the support yoke (6) and the support walls (10, 11) can be displaced and/or
the support strut (17) is implemented as a lost support strut, wherein said strut remains in the trench (5) when used as intended.

4. The support unit according to any one or more of the preceding claims, **characterized in that** the support walls (10, 11) each comprise a first support surface (12) by means of which the support walls (10, 11) can be placed on the edge of the trench, wherein said first support surface (12) is preferably disposed on the side facing away from the lowering space (18) and/or in the region of the end of the support walls (10, 11) facing toward the support yoke (6), so that the support walls (10, 11) comprise a substantially L-shaped cross section.

5. The support unit according to any one or more of the preceding claims, **characterized in that** the support yoke (6) is placed on the two support walls (10, 11).

6. The support unit according to any one or more of the preceding claims, **characterized in that** the support unit (2) comprises a lowering device (19) disposed on the supporting yoke (6), by means of which the pipe (4) can be lowered into the trench (5), wherein the lowering device (19) preferably comprises a flexible and/or adjustable-length lifting belt (21).

7. The support unit according to any one or more of the preceding claims, **characterized in that** the support unit (2) comprises an aligning device (22), particularly hydraulic and/or disposed on the supporting yoke (6), by means of which the pipe (4) to be laid can be displaced in the transverse direction relative to the support unit (2) for aligning relative to the trench (5) and/or to a pipe segment (37) for connecting to outside of the trench (5).

8. The support unit according to any one or more of the preceding claims, **characterized in that** the aligning device (22) comprises two pressure rams (23, 24) facing toward each other and/or displaceable in the transverse direction of the support unit (2), and/or
that the pressure rams (23, 24) can each be displaced from a retracted neutral position into pressing position further advanced into the lowering space (18) for aligning the pipe (4).

9. An installation system (1) for installing a lowerable pipe (4) in a trench, having
at least two support units (2a, 2b) for receiving transverse loads and spaced apart from each other in the longitudinal direction of the installation system and each comprising a support yoke for disposing at least partially outside of a trench (5), said yoke extending in the intended installed position in the manner of a bridge above a pipe (4) for disposing outside of and/or inside of the trench (5) and for lowering into the trench (5), and
at least one installing unit (3a to 3d) disposed between said two support units (2a, 2b) for supporting the trench wall
and comprising two support walls (26, 27) for disposing at least partially in the interior of the trench (5) and spaced apart from each other in the transverse direction of the support unit (3a to 3d),
**characterized in that**
that the installation system (1) is implemented to be self-supporting by means of the support units (2a, 2b) implemented according to any one or more of the preceding claims, and
that the support units (2a, 2b) together with the at least one installing unit (3a to 3d) form a barrier-free lowering space (18), within which the pipe (4) intended therefor can be lowered from a region outside of the trench (5) to the base of the trench.

10. The installation system according to the preceding claim, **characterized in that** the installing unit (3a to 3d) can be displaced and/or is releasably connected to the adjacent support unit (2) or to a further installing unit (3a to 3d) in the region of each of the two end faces thereof.

11. The installation system according to any one or more of the preceding claims, **characterized in that** the two installing walls (26, 27) are completely separated from each other in the transverse direction of the installing unit (3a to 3d).

12. The installation system according to any one or more of the preceding claims, **characterized in that** the installing walls (26, 27) are releasably and/or positively connected in the region of the end butt faces thereof to the support wall (10, 11) of the support unit (2) adjacent thereto in the longitudinal direction of the installation system, or to the installing wall (26, 27) of an adjacent installing unit (3a to 3d).

13. The installation system according to any one or more of the preceding claims, **characterized in that** the installing walls (26, 27) each comprise a second support surface (32) by means of which said walls can be placed on the edge of the trench.

14. A method for laying a pipe (4), particularly a flexible plastic pipe,
a trench (5) being excavated along a path of a trench,
**characterized in that**
an installation system (1) implemented according to any one or more of the claims 9-13 and having a plurality of displaceable support units (2a, 2b) and installing units (3a to 3d) is installed,
that the pipe (4) is lowered into a lowering segment within a barrier-free lowering space (18) of the installation system from a raised position substantially to the base of the trench and
is simultaneously retained in the raised position in a retaining segment in the region of the end of the pipe.

15. The method according to the preceding claim, **characterized in that** the support units (2a, 2b) and installing units (3a to 3d) disposed in the lowering segment are displaced into the retaining segment after the pipe (4) is lowered, wherein the support unit (2) or installing unit (3a to 3d) forming the rear end of the installation system is gradually displaced to the front end of the installation system.

## Revendications

1. Unité porteuse (2) pour un système de soutènement en porte-à-faux (1), avec
un étrier de support (6) pouvant être disposé au moins partiellement hors d'un fossé (5), qui, dans la position de soutènement prévue, s'étend à la manière d'un pont sur un tube (4) pouvant être disposé à l'extérieur et/ou au-dessus du fossé (5) et abaissé dans le fossé (5),
**caractérisée en ce que**
l'unité porteuse (2) comprend deux parois de soutènement (10, 11) pouvant être disposées au moins partiellement à l'intérieur du fossé (5) et distantes l'une de l'autre dans la direction transversale de l'unité porteuse (2),
les parois de soutènement (10, 11) se rattachent chacune à l'une des deux extrémités de l'étrier de support (6),
l'étrier de support (6) est relié de manière dissociable aux deux parois de soutènement (10, 11) dans une zone de raccordement (14, 15) respective, et
**en ce que** l'étrier de support (6) et les deux parois de soutènement (10, 11) forment ensemble un espace d'abaissement (18) sans obstacle, au sein duquel le tube (4) prévu à cet effet peut être abaissé depuis la zone de l'étrier de support (6) dans la zone des parois de soutènement (10, 11).

2. Unité porteuse selon la revendication précédente, **caractérisée en ce que** l'unité porteuse (2) comprend une entretoise de support (17), en particulier un raidisseur en bois,
qui s'étend du côté du fond du fossé dans la zone des extrémités des deux parois de soutènement (10, 11) détournées de l'étrier de support (6), entre ces deux parois de soutènement.

3. Unité porteuse selon l'une quelconque ou plusieurs des revendications précédentes, **caractérisée en ce que** l'étrier de support (6) et les parois de soutènement (10, 11) sont déplaçables et/ou l'entretoise de support (17) se présente sous la forme d'une entretoise de support perdue, celle-ci restant dans le fossé (5) dans son utilisation conforme à sa destination.

4. Unité porteuse selon l'une quelconque ou plusieurs des revendications précédentes, **caractérisée en ce que** les parois de soutènement (10, 11) présentent chacune une première surface d'appui (12) au moyen de laquelle les parois de soutènement (10, 11) peuvent être posées sur le bord du fossé, cette première surface d'appui (12) étant disposée de préférence sur le côté détourné de l'espace d'abaissement (18) et/ou dans la zone de l'extrémité des parois de soutènement (10, 11) tournée vers l'étrier de support (6), de sorte que les parois de soutènement (10, 11) présentent une section transversale sensiblement en forme de L.

5. Unité porteuse selon l'une quelconque ou plusieurs des revendications précédentes, **caractérisée en ce que** l'étrier de support (6) est posé sur les deux parois de soutènement (10, 11).

6. Unité porteuse selon l'une quelconque ou plusieurs des revendications précédentes, **caractérisée en ce que** l'unité porteuse (2) comprend un dispositif d'abaissement (19) disposé sur l'étrier de support (6), au moyen duquel le tube (4) peut être abaissé dans le fossé (5), le dispositif d'abaissement (19) comprenant de préférence une sangle de levage (21) flexible et/ou réglable en longueur.

7. Unité porteuse selon l'une quelconque ou plusieurs des revendications précédentes, **caractérisée en ce que** l'unité porteuse (2) comprend un dispositif d'alignement (22), en particulier un dispositif d'alignement hydraulique et/ou disposé sur l'étrier de support (6), au moyen duquel le tube (4) à poser peut être déplacé dans la direction transversale par rapport à l'unité porteuse (2) pour l'alignement sur le fossé (5) et/ou sur un segment de tube (37) à connecter en dehors du fossé (5).

8. Unité porteuse selon l'une quelconque ou plusieurs des revendications précédentes, **caractérisée en ce que** le dispositif d'alignement (22) comporte deux poinçons de pression (23, 24) se faisant face l'un l'autre et/ou déplaçables dans la direction transversale de l'unité porteuse (2) et/ou
**en ce que** les poinçons de pression (23, 24) sont déplaçables d'une position neutre rétractée à une position de pression déplacée plus loin dans l'espace d'abaissement (18) pour aligner le tube (4).

9. Système de soutènement (1) pour le soutènement de fossé pour un tube (4) à abaisser, avec
au moins deux unités porteuses (2a, 2b) distantes l'une de l'autre dans la direction longitudinale du système de soutènement pour absorber des forces transversales, qui comportent chacune un étrier de support pouvant être disposé au moins partiellement hors d'un fossé (5), qui, dans la position de soutènement prévue, s'étend à la manière d'un pont sur un tube (4) pouvant être disposé à l'extérieur et/ou au-dessus du fossé (5) et abaissé dans le fossé (5), et
au moins une unité de soutènement (3a à 3d) disposée entre ces deux unités porteuses (2a, 2b) pour soutenir la paroi du fossé,
qui comporte deux parois de soutènement (26, 27) pouvant être disposées au moins partiellement à l'intérieur du fossé (5), qui sont distantes l'une de l'autre dans la direction transversale de l'unité de soutènement (3a à 3d),
**caractérisé en ce que**
le système de soutènement (1) se présente sous une forme en porte-à-faux au moyen des unités porteuses (2a, 2b) se présentant sous une forme selon l'une quelconque ou plusieurs des revendications précédentes et
**en ce que** les unités de soutènement (2a, 2b) forment avec l'au moins une unité de soutènement (3a à 3d) un espace d'abaissement (18) sans obstacle, dans lequel le tube (4) prévu à cet effet peut être abaissé depuis une zone située hors du fossé (5) jusqu'au fond du fossé.

10. Système de soutènement selon la revendication précédente, **caractérisé en ce que** l'unité de soutènement (3a à 3d) est déplaçable et/ou reliée de manière amovible dans la région de ses deux faces frontales à l'unité porteuse (2) respectivement adjacente ou à une autre unité de soutènement (3a à 3d).

11. Système de soutènement selon l'une quelconque ou plusieurs des revendications précédentes, **caractérisé en ce que** les deux parois de soutènement (26, 27) sont complètement séparées l'une de l'autre dans la direction transversale de l'unité de soutènement (3a à 3d).

12. Système de soutènement selon l'une quelconque ou plusieurs des revendications précédentes, **caractérisé en ce que** les parois de soutènement (26, 27) sont reliées dans la zone de leurs surfaces de contact frontales, de manière dissociable et/ou par crabotage mécanique, à la paroi de soutènement (10, 11) respectivement adjacente de l'unité porteuse (2) dans la direction longitudinal du système de soutènement ou à la paroi de soutènement (26, 27) d'une unité de soutènement (3a à 3d) adjacente.

13. Système de soutènement selon l'une quelconque ou plusieurs des revendications précédentes, **caractérisé en ce que** les parois de soutènement (26, 27) présentent chacune une seconde surface d'appui (32) au moyen de laquelle celles-ci peuvent être posées sur le bord du fossé.

14. Procédé pour poser un tube (4), en particulier un tuyau flexible en matière plastique, dans lequel
une fossé (5) est creusé le long de l'itinéraire d'un fossé,
**caractérisé en ce que**
un système de soutènement (1) se présentant sous une forme selon l'une quelconque ou plusieurs des revendications 9 à 13 et comportant une pluralité d'unités porteuses (2a, 2b) et d'unités de soutènement (3a à 3d) déplaçables est introduit,
que le tube (4) est abaissé dans une section d'abaissement au sein d'un espace d'abaissement (18) sans obstacle du système de soutènement, à partir d'une position de levage sensiblement jusqu'au fond du fossé et
est simultanément maintenu en position de levage dans la zone de l'extrémité du tube dans une section de maintien.

15. Procédé selon la revendication précédente, **caractérisé en ce que** les unités porteuses (2a, 2b) et les unités de soutènement (3a à 3d) disposées dans la section d'abaissement sont déplacées dans la section de maintien après l'abaissement du tube (4), l'unité porteuse (2) ou l'unité de soutènement (3a à 3d) formant à chaque fois l'extrémité arrière du système de soutènement étant de préférence déplacée progressivement à l'extrémité avant du système de soutènement.
